# EUROPÄISCHE PATENTANMELDUNG

(11) **EP 2 330 262 A2**
(43) Veröffentlichungstag der Anmeldung: **08.06.2011**
(21) Anmeldenummer: 10193612.8
(22) Anmeldetag: 03.12.2010
(51) Int. Cl.: E04H 6/42, E04H 6/36, E04H 6/18

(54) **Verfahren zum Betreiben einer Parkanlage und Parkanlage**

(30) Priorität: 04.12.2009 DE 102009047504
(71) Anmelder: WAP Wöhr Automatikparksysteme GmbH & Co KG, 70825 Korntal-Münchingen (DE)
(72) Erfinder: Lenke, Wolfgang, 71277, Rutesheim (DE); Zangerle, Andreas, 71272, Renningen (DE)
(74) Vertreter: Hoeger, Stellrecht & Partner Patentanwälte

(57) **Zusammenfassung**

Die Erfindung betrifft ein Verfahren zum Betreiben einer automatisierten Parkanlage mit einer Mehrzahl von Stellplätzen für Kraftfahrzeuge, wobei ein Kraftfahrzeug nach Übergabe durch einen Benutzer in einem Übergabebereich mittels einer Fördereinrichtung zu einem Stellplatz transportiert und darin abgestellt werden kann. Um ein derartiges Verfahren so weiterzubilden, dass es vielseitiger einsetzbar ist, wird erfindungsgemäß vorgeschlagen, dass mindestens ein Stellplatz mit einer Lademöglichkeit für einen Energiespeicher eines zumindest teilweise elektrisch betriebenen Kraftfahrzeuges vorgesehen ist und dass das Kraftfahrzeug mittels der Fördereinrichtung zu einem Stellplatz mit Lademöglichkeit transportiert und darin abgestellt wird und dann der Energiespeicher geladen wird. Außerdem betrifft die Erfindung eine Parkanlage.

## Beschreibung

Die Erfindung betrifft ein Verfahren zum Betreiben einer automatisierten Parkanlage mit einer Mehrzahl von Stellplätzen für Kraftfahrzeuge, wobei ein Kraftfahrzeug nach Übergabe durch einen Benutzer in einem Übergabebereich mittels einer Fördereinrichtung zu einem Stellplatz transportiert und darin abgestellt werden kann.

Außerdem betrifft die Erfindung eine automatisierte Parkanlage, umfassend eine Mehrzahl von Stellplätzen zum Abstellen von Kraftfahrzeugen, einen Übergabebereich für ein Kraftfahrzeug, eine Fördereinrichtung, mit der ein Kraftfahrzeug vom Übergabebereich zu einem Stellplatz transportierbar und darin abstellbar ist, sowie eine Steuereinrichtung für die Fördereinrichtung.

Aufgabe der vorliegenden Erfindung ist es, ein derartiges Verfahren sowie eine derartige Parkanlage so weiterzubilden, dass es bzw. sie vielseitiger einsetzbar sind.

Diese Aufgabe wird bei einem Verfahren der eingangs genannten Art erfindungsgemäß dadurch gelöst, dass mindestens ein Stellplatz mit einer Lademöglichkeit für einen Energiespeicher eines zumindest teilweise elektrisch betriebenen Kraftfahrzeuges vorgesehen ist und dass das Kraftfahrzeug mittels der Fördereinrichtung zu einem Stellplatz mit Lademöglichkeit transportiert und darin abgestellt wird und dann der Energiespeicher geladen wird.

Bei dem zumindest teilweise elektrisch betriebenen Kraftfahrzeug kann es sich sowohl um ein rein elektrisch betreibbares Kraftfahrzeug handeln als auch um ein Hybridfahrzeug, welches über einen elektrischen Antrieb hinaus auch einen Antrieb mittels einer Brennkraftmaschine umfasst.

Bei dem Energiespeicher handelt es sich insbesondere um eine wiederaufladbare Batterie, etwa einen Akkumulator, für den zumindest teilweise elektrischen Antrieb des Kraftfahrzeuges.

Mittels des erfindungsgemäßen Verfahrens ist es möglich, dem Energiespeicher eines zumindest teilweise elektrisch betriebenen Kraftfahrzeuges während dessen Verweilzeit in der Parkanlage Energie zuzuführen und ihn auf diese Weise zu laden. Hierzu ist mindestens ein Stellplatz mit einer Lademöglichkeit für den Energiespeicher ausgestattet, und mittels der Fördereinrichtung kann das Kraftfahrzeug zu diesem Stellplatz transportiert und darin abgestellt werden, woraufhin der Ladevorgang beginnen kann. Dies ermöglicht eine sinnvolle Ausnutzung der Parkdauer, innerhalb derer der Benutzer nicht auf sein Kraftfahrzeug angewiesen ist.

Für einen Besitzer eines elektrisch betriebenen Kraftfahrzeuges erweist sich die nach dem erfindungsgemäßen Verfahren betriebene Parkanlage als sehr benutzerfreundlich. Beispielsweise kann er bei der Übergabe seines Kraftfahrzeuges im Übergabebereich die Anweisung erteilen, den Energiespeicher für eine bestimmte Zeitdauer zu laden. Für ihn entfällt die Suche nach einem mit einer Lademöglichkeit ausgestatteten Stellplatz, weil das Kraftfahrzeug von der Fördereinrichtung darin abgestellt wird. Dadurch nimmt die Übergabe des elektrisch betriebenen Kraftfahrzeuges an die Parkanlage nicht mehr Zeit in Anspruch als die Übergabe eines ausschließlich mit Brennkraftmaschine betriebenen Kraftfahrzeuges. Durch den Einsatz der Fördereinrichtung in der automatisierten Parkanlage lassen sich zudem anders als in herkömmlichen nichtautomatischen Parkanlagen Fehlbelegungen von mit einer Lademöglichkeit ausgestatteten Stellplätzen durch nicht elektrisch betriebene Kraftfahrzeuge vermeiden. Hierbei kann insbesondere vorgesehen sein, dass mit Lademöglichkeit ausgestattete Stellplätze ausschließlich mit zumindest teilweise elektrisch betriebenen Kraftfahrzeugen belegt werden dürfen. Es ist auch möglich, dass ein mit einer Lademöglichkeit ausgestatteter Stellplatz zwar mit einem nicht elektrisch betriebenen Kraftfahrzeug belegt werden darf, aber nur so lange, bis er zum Einstellen eines elektrisch betriebenen Kraftfahrzeuges benötigt wird, um dessen Energiespeicher zu laden. Mittels der Fördereinrichtung kann das nicht elektrisch betriebene Kraftfahrzeug dann zu einem Stellplatz ohne Lademöglichkeit transportiert und darin abgestellt werden, um den Stellplatz mit Lademöglichkeit zur Verfügung zu stellen.

"Lademöglichkeit" ist vorliegend dahingehend zu verstehen, dass ein mit einer Lademöglichkeit versehener Stellplatz zum Laden des Energiespeichers eines zumindest teilweise elektrisch betriebenen Kraftfahrzeuges ausgebildet ist, wohingegen dies bei einem Stellplatz ohne Lademöglichkeit nicht der Fall ist. Es ist insbesondere möglich, dass sämtliche Stellplätze der Parkanlage mit einer Lademöglichkeit ausgestattet sind.

Nachfolgend wird unter einem Stellplatz ein Stellplatz mit einer Lademöglichkeit für den Energiespeicher verstanden, soweit nicht anders erwähnt, und unter einem Kraftfahrzeug wird ein zumindest teilweise elektrisch betriebenes Kraftfahrzeug verstanden, soweit nicht anders erwähnt.

Günstig ist es, wenn eine Ladeeinrichtung für den Energiespeicher aktiviert wird, wenn das Kraftfahrzeug im Stellplatz angeordnet ist. Mittels der Ladeeinrichtung kann der Energiespeicher mit Energie, speziell elektrischer Energie, beaufschlagt und dadurch geladen werden. Die Ladeeinrichtung braucht nicht dauerhaft in Betrieb zu sein, wenn kein Kraftfahrzeug im Stellplatz angeordnet ist.

Von Vorteil ist es, wenn das Kraftfahrzeug auf einer Palette positioniert wird, die mittels der Fördereinrichtung zum Stellplatz transportiert und darin abgestellt wird und wenn eine Ladeeinrichtung für den Energiespeicher bei im Stellplatz angeordneter Palette aktiviert wird. Auch bei dieser Ausführungsform kann die Ladeeinrichtung zum Beaufschlagen des Energiespeichers mit speziell elektrischer Energie aktiviert werden. Das Kraftfahrzeug ist zum erleichterten Transport auf einer Palette platziert, mittels derer es auch in den Stellplatz eingebracht werden kann.

Vorzugsweise wird das Kraftfahrzeug auf einer mit einer Ladeeinrichtung für den Energiespeicher ausgestatteten Palette positioniert, um einen einfachen Verfahrensablauf zu ermöglichen. Die Ladeeinrichtung der Palette kann aktiviert werden, wenn diese im Stellplatz abgestellt wird, um den Energiespeicher mit Energie zu beaufschlagen.

Vorteilhafterweise wird mit dem Abstellen der Palette im Stellplatz ein Kontakt zwischen der Ladeeinrichtung und einer Energiequelle geschlossen und dadurch die Ladeeinrichtung mit Energie beaufschlagt. Dies ermöglicht einen einfachen und zuverlässigen Verfahrensablauf, bei dem mit dem Abstellen der Palette im Stellplatz gewissermaßen "automatisch" ein Kontakt zwischen der Energiequelle und der Ladeeinrichtung hergestellt wird. Die Energiequelle ist speziell eine Stromquelle, um die Ladeeinrichtung mit elektrischer Energie zu beaufschlagen.

Mit dem Abstellen der Palette im Stellplatz kann günstigerweise die Ladeeinrichtung berührungslos mit Energie beaufschlagt werden, beispielsweise durch induktive Kopplung. Hierfür kann am Stellplatz eine Energieübertragungseinrichtung vorhanden sein, die mit der Ladeeinrichtung zusammenwirkt.

Es kann vorgesehen sein, dass das Abstellen der Palette und/oder des Kraftfahrzeuges im Stellplatz mit einer Sensoreinrichtung erfasst wird und dass daraufhin die Ladeeinrichtung mit Energie beaufschlagt wird. Beispielsweise lässt sich bei dieser Ausgestaltung des Verfahrens sicherstellen, dass die Palette und/oder das Kraftfahrzeug in korrekter Weise relativ zum Stellplatz und/oder relativ zu einer daran angeordneten Ladeeinrichtung positioniert ist, bevor die Ladeeinrichtung mit Energie beaufschlagt wird sowie gegebenenfalls relativ zum Kraftfahrzeug ausgerichtet wird. Die Lage des Kraftfahrzeugs und/oder der Palette im Stellplatz kann z.B. optisch erfasst werden.

Nach dem Ende des Ladevorganges ist es möglich, dass das Kraftfahrzeug im Stellplatz mit Lademöglichkeit verbleibt, insbesondere dann, wenn der Stellplatz nicht für einen weiteren Ladevorgang benötigt wird. Es kann allerdings auch vorgesehen sein, dass der Stellplatz durch Abstellen des Kraftfahrzeuges in einem Stellplatz ohne Lademöglichkeit freigegeben wird.

Es ist auch möglich, dass kontrolliert wird, ob der Energiespeicher tatsächlich geladen werden kann. Ist dies nicht der Fall, beispielsweise bei defektem Energiespeicher, kann der Ladevorgang abgebrochen und das Kraftfahrzeug aus dem Stellplatz mit Lademöglichkeit entfernt werden.

Günstig ist es, wenn das Kraftfahrzeug in Ermangelung eines freien mit einer Lademöglichkeit versehenen Stellplatzes mittels der Fördereinrichtung zu einem nicht mit einer Lademöglichkeit ausgestatteten Stellplatz transportiert und darin abgestellt wird und dass nach Freiwerden eines Stellplatzes mit Lademöglichkeit das Kraftfahrzeug mittels der Fördereinrichtung dorthin transportiert und darin abgestellt wird und dann der Energiespeicher geladen wird. Um festzustellen, ob alle mit einer Lademöglichkeit versehenen Stellplätze von Kraftfahrzeugen besetzt sind, kann die Parkanlage beispielsweise eine Steuereinrichtung aufweisen, die auch mit der Fördereinrichtung in Wirkverbindung steht. Wird ein Stellplatz mit Lademöglichkeit frei, kann die Steuereinrichtung die Fördereinrichtung aktivieren, um das auf dem Stellplatz ohne Lademöglichkeit zwischengeparkte Kraftfahrzeug zu dem Stellplatz mit Lademöglichkeit zu transportieren und zum Laden des Energiespeichers darin abzustellen.

Es ist möglich, dass der Ladevorgang mindestens einmal unterbrochen wird. Hierfür kann das Kraftfahrzeug mittels der Fördereinrichtung zwischenzeitlich aus dem Stellplatz mit Lademöglichkeit entfernt, in einem Stellplatz ohne Lademöglichkeit zwischengeparkt und zur Fortsetzung des Ladevorgangs wieder in einem Stellplatz mit Lademöglichkeit abgestellt werden. Dies erlaubt es, die Belegung von Stellplätzen mit Lademöglichkeit flexibel zu gestalten.

Die tatsächliche Ladedauer für den Energiespeicher wird günstigerweise anhand mindestens eines Kriteriums bestimmt, z.B. mittels der vorstehend genannten Steuereinrichtung.

So kann beispielsweise vorgesehen sein, dass eine tatsächliche Ladedauer für den Energiespeicher bestimmt wird in Abhängigkeit von einer von einem Benutzer vorgegebenen Ladedauer und/oder einer von einem Benutzer vorgegebenen Abholzeit für das Kraftfahrzeug und/oder einer von einem Benutzer vorgegebenen Parkdauer für das Kraftfahrzeug und/oder einer dem Energiespeicher zuzuführenden Energiemenge und/oder einem Geldbetrag entsprechend einer dem Energiespeicher zuzuführenden Energiemenge und/oder einer Berechtigung des Benutzers zur Nutzung der Lademöglichkeit der Parkanlage und/oder einem Ladezustand des Energiespeichers. Auf diese Weise kann die Belegung eines oder mehrerer mit einer Lademöglichkeit versehenen Stellplätze optimiert werden. So ist es z.B. möglich, dass ein Benutzer bei der Übergabe des Kraftfahrzeuges eine Ladedauer vorgibt, welche nicht durch ein Guthaben oder einen Geldbetrag des Benutzers gedeckt ist. In diesem Fall kann die Steuereinrichtung den Ladevorgang nach Aufbrauchen des Guthabens oder des Geldbetrages abbrechen. Es kann auch vorgesehen sein, dass dann, wenn die von einem Benutzer gewünschte Ladedauer kleiner ist als die Zeitspanne zwischen der Übergabe des Kraftfahrzeugs und der vorgegebenen Abholzeit, mit Hilfe der Steuereinrichtung entschieden wird, zu welchem Zeitpunkt das Kraftfahrzeug günstigerweise im Stellplatz mit Lademöglichkeit abgestellt und das Laden der Energie begonnen wird. Möglich ist etwa auch, dass der Ladezustand des Energiespeichers erfasst wird und der Energiespeicher nur solange geladen ist, bis sie vollständig geladen ist, entgegen einer anderslautenden durch den Benutzer vorgegebenen längeren Ladedauer.

Die Belegung mit Kraftfahrzeugen von einem oder mehreren mit einer Lademöglichkeit versehenen Stellplätzen wird ebenfalls anhand mindestens eines Kriteriums bestimmt, z.B. mittels der vorstehend genannten Steuereinrichtung.

So kann vorgesehen sein, dass eine Belegung mit Kraftfahrzeugen von einem oder mehreren mit einer Lademöglichkeit versehenen Stellplätzen der Parkanlage bestimmt wird in Abhängigkeit von einer jeweiligen tatsächlichen Ladedauer für den Energiespeicher des Kraftfahrzeuges - wie vorstehend bereits erläutert - und/oder einer Vorschrift, die den Vorrang eines Kraftfahrzeuges zum Laden dessen Energiespeichers vor anderen Kraftfahrzeugen regelt und/oder einem Benutzerprofil eines die Parkanlage benutzenden Benutzers und/oder einem Kraftfahrzeugtyp und/oder einer möglichst geringen Anzahl an Umsetzungen von Kraftfahrzeugen zwischen Stellplätzen der Parkanlage mittels der Fördereinrichtung und/oder zu einer Tages- oder Nachtzeit. Auf diese Weise kann die Belegung von Stellplätzen optimiert werden. Beispielsweise kann vorgesehen sein, dass ein Benutzer oder dessen Kraftfahrzeug eine höhere Priorität beim Laden des Energiespeichers genießt als ein anderer Benutzer oder dessen Kraftfahrzeug. Es ist auch möglich, dass die Stellplätze mit Lademöglichkeit hinsichtlich der Kraftfahrzeugtypen zu unterscheiden sind, dessen Energiespeicher darin geladen werden kann. So kann beispielsweise ein Stellplatz vorgesehen sein, in dem vorzugsweise eine große Reiselimousine abgestellt wird oder ein Wagen der Kompaktklasse oder ein Kleintransporter, etc. Möglich ist auch, dass ein Profil des die Parkanlage benutzenden Benutzers bei der Übergabe des Kraftfahrzeugs ermittelt wird, welches Profil beispielsweise auf einem Berechtigungsträger des Benutzers gespeichert ist oder im Kraftfahrzeug gespeichert ist und bei der Übergabe des Kraftfahrzeugs automatisch ausgelesen werden kann. Insbesondere allerdings wird das Verfahren besonders bevorzugt so durchgeführt, dass mittels der Fördereinrichtung eine möglichst geringe Anzahl an Umsetzungen von Kraftfahrzeugen zwischen Stellplätzen der Parkanlage erfolgen muss. Dadurch lässt sich ein unnötiger Betrieb der Fördereinrichtung vermeiden. Von Vorteil ist es auch, wenn die Energiespeicher von Kraftfahrzeugen mit preiswerter Energie geladen werden, beispielsweise nachts mit preiswertem Nachtstrom, wenn ein Benutzer sein Kraftfahrzeug über Nacht in die Parkanlage einstellt.

Es kann vorgesehen sein, dass Energiespeichern in Form von Akkumulatoren Energie entnommen wird, wenn das jeweilige Kraftfahrzeug im Stellplatz mit Lademöglichkeit abgestellt ist.

Es ist günstig, wenn die Belegung mit Kraftfahrzeugen von einem oder mehreren mit einer Lademöglichkeit versehenden Stellplätzen derart bestimmt wird, dass der Energiespeicher mindestens eines Kraftfahrzeuges zu einer ersten Tages- oder Nachtzeit geladen und zu einer zweiten Tages- oder Nachtzeit entladen und die entnommene Energie einem Energieversorgungsnetz bereitgestellt wird. Dies kann unter dem Vorbehalt einer Zustimmung durch den Benutzer stehen. Damit lässt sich ein hoher Energiebedarf zu Spitzenlastzeiten, etwa in einem öffentlichen Stromnetz, zu einer bestimmten Tages- oder Nachtzeit einfacher decken. So kann vorgesehen sein, dass die Energiespeicher von Kraftfahrzeugen nachts preiswert aufgeladen und etwa tagsüber zu Spitzenlastzeiten entladen werden, wenn die Verweilzeiten der Kraftfahrzeuge in der Parkanlage hierfür ausreichen.

Vorzugsweise wird die tatsächliche Ladedauer für den Energiespeicher und/oder die Belegung mit Kraftfahrzeugen von einem oder mehreren mit einer Lademöglichkeit versehenen Stellplätzen zeitabhängig bestimmt, um den Betrieb der Parkanlage so anpassungsfähig wie möglich zu gestalten. Beispielsweise kann in regelmäßigen Zeitintervallen die jeweilige Ladedauer des Energiespeichers eines Kraftfahrzeuges neu bestimmt werden und/oder die Belegung der mit Lademöglichkeit versehenen Stellplätze optimiert werden. Ergänzend kann vorgesehen sein, dass bei dem Einstellen eines weiteren Kraftfahrzeuges in die Parkanlage und/oder beim Abholen eines Kraftfahrzeuges aus der Parkanlage eine Neubestimmung der Ladedauer und/oder der Belegung der Stellplätze durchgeführt wird. Dies kann unabhängig davon sein, ob ein elektrisch betriebenes Kraftfahrzeug neu eingestellt oder abgeholt wird.

Günstig ist es, wenn der Energiespeicher kabelgebunden geladen wird, denn dadurch lässt sich der Energiespeicher zuverlässig laden und die Parkanlage konstruktiv einfach ausgestalten. Der Energiespeicher kann dann mit einer Energiequelle über ein Kabel oder dergleichen verbunden sein.

Von Vorteil ist es, wenn der Energiespeicher berührungslos geladen wird, denn dadurch erweisen sich das Verfahren und die Parkanlage als anpassungsfähiger an unterschiedliche Kraftfahrzeugtypen. Beispielsweise kann der Energiespeicher induktiv geladen werden. Hierbei braucht der Energiespeicher nicht mit der Energiequelle über ein Kabel oder dergleichen verbunden zu sein.

Hierbei ist es günstig, wenn vor dem Beginn des Ladevorgangs die Übertragung von Energie von einer Ladeeinrichtung für den Energiespeicher zu dem Energiespeicher optimiert wird. Dadurch kann sichergestellt werden, dass der Energiespeicher zuverlässig geladen wird, bevor der eigentliche Ladevorgang begonnen wird. Es kann z.B. vorgesehen sein, dass für eine kurze Zeitdauer der Energieübertrag von der Ladeeinrichtung zu dem Energiespeicher erfasst und das Kraftfahrzeug so relativ zur Ladeeinrichtung positioniert wird, dass dieser Energieübertrag ein Maximum erreicht.

Günstigerweise wird im Übergabebereich eine Relativausrichtung des Kraftfahrzeugs und einer Palette, auf der es mittels der Fördereinrichtung transportierbar ist, zueinander und/oder eine Relativausrichtung des Kraftfahrzeugs und einer an der Palette angeordneten Ladeeinrichtung für den Energiespeicher vorgenommen. Im Übergabebereich der Parkanlage erfolgt in der Regel eine Positionierung des Kraftfahrzeugs dahingehend, dass dessen Aufnahme mittels der Fördereinrichtung möglich ist. Hierfür weist die Parkanlage typischerweise eine Erfassungseinrichtung auf. Beispielsweise kann die Erfassungseinrichtung bei der vorliegenden Ausgestaltung des Verfahrens eingesetzt werden, um das Kraftfahrzeug relativ zu der Palette und/oder relativ zu der Ladeeinrichtung auszurichten oder umgekehrt. Dadurch kann bereits im Übergabebereich die Übertragung von Energie von der Ladeeinrichtung zu dem Energiespeicher optimiert werden. Dies ist auch dann möglich, wenn an der Palette selbst zwar keine Ladeeinrichtung angeordnet ist, aber bekannt ist, in welcher Weise die Palette relativ zu einer beispielsweise am Stellplatz angeordneten Ladeeinrichtung positioniert werden kann.

In entsprechender Weise kann im Stellplatz eine Relativausrichtung des Kraftfahrzeuges und einer am Stellplatz angeordneten Ladeeinrichtung zueinander vorgenommen werden und/oder das Kraftfahrzeug relativ zum Stellplatz mit daran angeordneter Ladeeinrichtung ausgerichtet werden.

Bevorzugt werden zum Laden des Energiespeichers zu entrichtende Gebühren automatisch erfasst und einem Nutzerkonto belastet. Kosten für die Benutzung der Lademöglichkeit können auf diese Weise einfach und benutzerfreundlich abgerechnet werden.

Wie bereits erwähnt, betrifft die Erfindung auch eine Parkanlage. Bei einer gattungsgemäßen Parkanlage wird die eingangs gestellte Aufgabe erfindungsgemäß dadurch gelöst, dass die Parkanlage mindestens eine Ladeeinrichtung für einen Energiespeicher eines zumindest teilweise elektrisch betriebenen Kraftfahrzeuges sowie mindestens einen mit einer Lademöglichkeit für den Energiespeicher versehenen Stellplatz umfasst und dass das Kraftfahrzeug in Folge einer der Steuereinrichtung übermittelbaren Anweisung mittels der Fördereinrichtung zum Stellplatz transportierbar und darin abstellbar ist, wobei die mindestens eine Ladeeinrichtung bei im Stellplatz abgestelltem Kraftfahrzeug mit Energie beaufschlagbar ist.

Mittels der erfindungsgemäßen Parkanlage ist das erfindungsgemäße Verfahren durchführbar. Die bereits im Zusammenhang mit der Erläuterung des erfindungsgemäßen Verfahrens erzielbaren Vorteile können mit der Parkanlage erzielt werden. Über die Ladeeinrichtung kann der Energiespeicher mit Energie beaufschlagt und so geladen werden.

Die Anweisung zum Laden des Energiespeichers wird der Steuereinrichtung üblicherweise von einem Benutzer bei der Übergabe des Kraftfahrzeuges im Übergabebereich gegeben werden.

An einem Stellplatz mit Lademöglichkeit ist vorteilhafterweise eine Energiezufuhrleitung angeordnet, die mit einer Energiequelle verbunden ist und mit der mindestens einen Ladeeinrichtung so koppelbar ist, dass eine Übertragung von Energie von der Energiequelle zur Ladeeinrichtung ermöglicht wird.

Günstig ist es, wenn mindestens eine Ladeeinrichtung auf einer Standfläche des Stellplatzes für das Kraftfahrzeug angeordnet ist, denn dies ermöglicht eine einfache konstruktive Ausgestaltung der Parkanlage. Es brauchen insbesondere nur so viele Ladeeinrichtungen wie Stellplätze mit Lademöglichkeit vorhanden zu sein.

Von Vorteil ist es, wenn die Parkanlage mindestens eine Palette für das Kraftfahrzeug aufweist, auf der dieses mittels der Fördereinrichtung transportierbar und im Stellplatz abstellbar ist und wenn mindestens eine Ladeeinrichtung an der Palette gehalten ist. Dadurch erweist sich die Parkanlage als vielseitig und anpassungsfähig. Mindestens eine und bevorzugt jede Palette der Parkanlage kann eine Ladeeinrichtung umfassen, welche zusammen mit dem Kraftfahrzeug mittels der Fördereinrichtung im Stellplatz abstellbar ist. Im Stellplatz selbst braucht keine Ladeeinrichtung mehr vorhanden zu sein, auch wenn dies selbstverständlich zusätzlich möglich ist. Bereits im Übergabebereich kann ein elektrisch betriebenes Kraftfahrzeug als solches identifiziert und daraufhin eine eine Ladeeinrichtung umfassende Palette zur Entgegennahme des Kraftfahrzeuges zum Übergabebereich transportiert werden.

Bei einer andersartigen Ausführungsform der erfindungsgemäßen Parkanlage ist es von Vorteil, wenn mindestens eine Ladeeinrichtung am Stellplatz an einem diesem zugeordneten Träger gehalten ist und wenn das Kraftfahrzeug auf einer Palette im Stellplatz abstellbar ist. Auch in diesem Fall brauchen nur so viele Ladeeinrichtungen vorhanden zu sein wie mit Lademöglichkeit versehene Stellplätze, wobei das Kraftfahrzeug allerdings auf einer Palette im Stellplatz abstellbar ist und nicht auf einer Standfläche des Stellplatzes.

Vorzugsweise umfasst mindestens eine Ladeeinrichtung ein an das Kraftfahrzeug anschließbares Ladekabel. Dies ermöglicht eine einfache konstruktive Ausgestaltung der Ladeeinrichtung. Das Ladekabel, insbesondere ein Stromkabel, kann vom Benutzer an das Kraftfahrzeug, z.B. an einen mit dem Energiespeicher verbundenen Stecker am Kraftfahrzeug, bei der Übergabe im

Übergabebereich angeschlossen werden. Über das Ladekabel kann dem Energiespeicher speziell elektrische Energie zugeführt werden.

Günstig ist es, wenn mindestens eine Ladeeinrichtung zum berührungslosen Laden des Energiespeichers ausgebildet ist, denn dies ermöglicht einen benutzerfreundlichen Betrieb der Parkanlage. Ein Anschließen eines Ladekabels an das Kraftfahrzeug ist dann nicht vonnöten. Insbesondere kann die Ladeeinrichtung zum induktiven Laden des Energiespeichers ausgebildet sein und mindestens eine mit Strom beaufschlagbare Primärspule umfassen, welche mit mindestens einer am Kraftfahrzeug gehaltenen Sekundärspule induktiv gekoppelt werden kann. Die Sekundärspule ist mit dem Energiespeicher, speziell einem Akkumulator, elektrisch verbunden oder in diesen integriert.

Von Vorteil ist es, wenn die Parkanlage mindestens eine von der Steuereinrichtung ansteuerbare Verstelleinrichtung für mindestens eine Ladeeinrichtung umfasst zum Bewegen der Ladeeinrichtung relativ zum Kraftfahrzeug in mindestens einer Raumrichtung. Dies erweist sich insbesondere dann als günstig, wenn der Energiespeicher berührungslos und speziell induktiv geladen wird. Mittels der Verstelleinrichtung kann die Ladeeinrichtung so relativ zum Kraftfahrzeug positioniert werden, dass eine möglichst wirkungsvolle Energieübertragung von der Ladeeinrichtung zum Energiespeicher erzielt werden kann. Eine an einer Palette für das Kraftfahrzeug gehaltene Ladeeinrichtung kann beispielsweise in Längs- und/oder Querrichtung der Palette verstellbar ausgebildet sein sowie in einer von der Palette in Richtung auf das Kraftfahrzeug weisenden Richtung, um sie an das Kraftfahrzeug anzunähern. Ist die Ladeeinrichtung an einem Stellplatz angeordnet oder an einem einem Stellplatz zugeordneten Träger gehalten, ist in entsprechender Weise möglich, dass die Ladeeinrichtung in Längs- und/oder Quererstreckung des Stellplatzes verstellbar ist sowie zusätzlich entlang einer Höhenrichtung. Auch auf diese Weise kann die Ladeeinrichtung dem Kraftfahrzeug angenähert werden, um eine wirkungsvolle Energieübertragung zu ermöglichen.

Bevorzugt weist die Parkanlage mindestens eine Palette für das Kraftfahrzeug auf, auf der dieses mittels der Fördereinrichtung transportierbar und im Stellplatz abstellbar ist, und an der Palette ist mindestens ein erstes Kontaktelement gehalten, das beim Abstellen der Palette im Stellplatz mit einem am Stellplatz angeordneten zweiten Kontaktelement zusammenwirken kann, um eine Beaufschlagung mindestens einer Ladeeinrichtung mit Energie zu aktivieren. Dies ermöglicht eine einfache konstruktive Ausgestaltung und eine zuverlässige Funktion der Parkanlage. Wird die Palette im Stellplatz abgestellt, wirken die zwei Kontaktelemente zusammen, so dass ein Kontakt geschlossen wird. Dadurch kann die Ladeeinrichtung mit Energie beaufschlagt und infolge dessen auch der Energiespeicher geladen werden. Es kann vorgesehen sein, dass die Kontaktelemente unmittelbar in eine Energiezufuhrleitung von einer Energiequelle bis zur Ladeeinrichtung geschaltet sind, um die Ladeeinrichtung über die Kontaktelemente mit Energie zu beaufschlagen. Es ist jedoch auch möglich, dass die Kontaktelemente in einen Erkennungsschaltkreis geschaltet sind, bei dessen Aktivierung eine zwischen der Energiequelle und der Ladeeinrichtung bestehende Energiezufuhrmöglichkeit freigegeben wird zur Beaufschlagung der Ladeeinrichtung mit Energie.

Die Energiezufuhrleitung ist günstigerweise eine Stromleitung, die von einer Energiequelle in Form einer Stromquelle bis zum Stellplatz verlegt ist, etwa ein Stromkabel oder eine Stromschiene.

Günstigerweise wird mindestens einer Ladeeinrichtung mit dem Abstellen der Palette im Stellplatz berührungslos Energie zugeführt, z.B. induktiv. Hierfür weist die Parkanlage, wie bereits erwähnt, eine mit der Ladeeinrichtung zusammenwirkende Energieübertragungseinrichtung auf, welche mit einer Stromquelle über eine Stromleitung verbunden sein kann.

Vorteilhafterweise umfasst die Parkanlage mindestens eine Sensoreinrichtung, mit der das Abstellen des Kraftfahrzeuges und/oder einer Palette mit einem darauf angeordneten Kraftfahrzeug im Stellplatz erfassbar ist, und in Abhängigkeit eines von der mindestens einen Sensoreinrichtung ausgebbaren Signals ist die Beaufschlagung mindestens einer Ladeeinrichtung mit Energie aktivierbar. Dies ermöglicht es z.B., den Ladevorgang erst dann zu beginnen, wenn die korrekte Positionierung des Kraftfahrzeuges und/oder der Palette relativ zum Stellplatz und/oder relativ zu einer daran angeordneten Ladeeinrichtung erfasst und daraufhin ein entsprechendes Signal ausgegeben worden ist. Bei der Sensoreinrichtung kann es sich um eine optische Sensoreinrichtung handeln.

Vorzugsweise umfasst die Parkanlage mindestens eine mit der Steuereinrichtung in Wirkverbindung stehende Erfassungseinrichtung zum Erfassen der Relativausrichtung des Kraftfahrzeuges und einer Palette zueinander und/oder der Relativausrichtung des Kraftfahrzeuges und mindestens einer Ladeeinrichtung zueinander. Dies hat sich insbesondere dann als günstig erwiesen, wenn eine zum berührungslosen Laden des Energiespeichers ausgebildete Ladeeinrichtung zum Einsatz kommt, die speziell an der Palette gehalten sein kann. Dies ermöglicht es, bereits vor dem Beginn des eigentlichen Ladevorganges eine Energieübertragung von der Ladeeinrichtung zu dem Energiespeicher zu optimieren, etwa indem das Kraftfahrzeug und die Palette in geeigneter Weise relativ zueinander und/oder das Kraftfahrzeug und die Ladeeinrichtung relativ zueinander ausgerichtet werden. Zu diesem Vorgang kann z.B. eine in dem Übergabebereich typischerweise vorhandene Erfassungseinrichtung eingesetzt werden, mit der üblicherweise eine korrekte Ausrichtung des Kraftfahrzeuges relativ zur einer Palette erfassbar ist. Es kann sich bei der Erfassungseinrichtung auch um eine am Stellplatz angeordnete Sensoreinrichtung handeln, beispielsweise die vorstehend genannte Sensoreinrichtung der zuletzt genannten bevorzugten Ausführungsform.

Bei einer vorteilhaften Ausführungsform der erfindungsgemäßen Parkanlage hat es sich als günstig erwiesen, wenn mittels der Steuereinrichtung eine tatsächliche Ladedauer für den Energiespeicher und/oder eine Belegung mit Kraftfahrzeugen von einem oder mehreren mit einer Lademöglichkeit versehenen Stellplätzen jeweils in Abhängigkeit von mindestens einem Kriterium bestimmbar ist. Hierbei kann es sich um eines der jeweils vorstehend genannten Kriterien zur Bestimmung der tatsächlichen Ladedauer bzw. der Belegung von Stellplätzen handeln.

Die nachfolgende Beschreibung bevorzugter Ausführungsformen der Erfindung dient im Zusammenhang mit der Zeichnung der näheren Erläuterung der Erfindung. Es zeigen:
- Figur 1:: einen schematischen Horizontalschnitt durch eine erste Ausführungsform einer erfindungsgemäßen Parkanlage zu einem ersten Zeitpunkt;
- Figur 2:: die Parkanlage aus Figur 1 zu einem späteren Zeitpunkt;
- Figur 3:: eine schematische perspektivische Ansicht einer ersten Palette für ein Kraftfahrzeug zur Anwendung in der Parkanlage aus Figur 1;
- Figur 4:: eine schematische Seitenansicht eines auf der Palette aus Figur 3 stehenden Kraftfahrzeugs in der Parkanlage aus Figur 1;
- Figur 5:: eine schematische perspektivische Ansicht einer zweiten Palette für ein Kraftfahrzeug zur Anwendung in der Parkanlage aus Figur 1;
- Figur 6:: eine schematische Seitenansicht eines auf der Palette aus Figur 5 stehenden Kraftfahrzeugs in der Parkanlage aus Figur 1;
- Figur 7:: eine schematische perspektivische Ansicht einer dritten Palette für ein Kraftfahrzeug zur Anwendung in der Parkanlage aus Figur 1;
- Figur 8:: eine schematische Seitenansicht eines auf der Palette aus Figur 7 stehenden Kraftfahrzeugs in der Parkanlage aus Figur 1;

- Figur 9:: eine schematische Längsschnittansicht eines Übergabebereiches der Parkanlage aus Figur 1 bei der Übergabe eines Kraftfahrzeuges;
- Figur 10:: eine schematische Vertikalschnittansicht einer zweiten bevorzugten Ausführungsform einer erfindungsgemäßen Parkanlage zu einem ersten Zeitpunkt und;
- Figur 11:: die Parkanlage aus Figur 20 zu einem späteren Zeitpunkt.

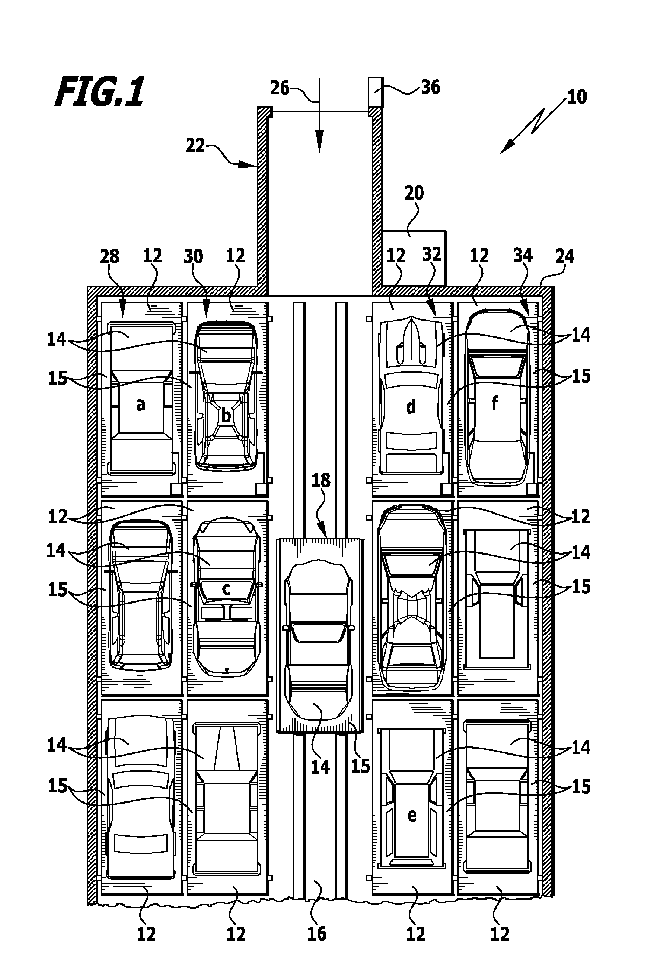

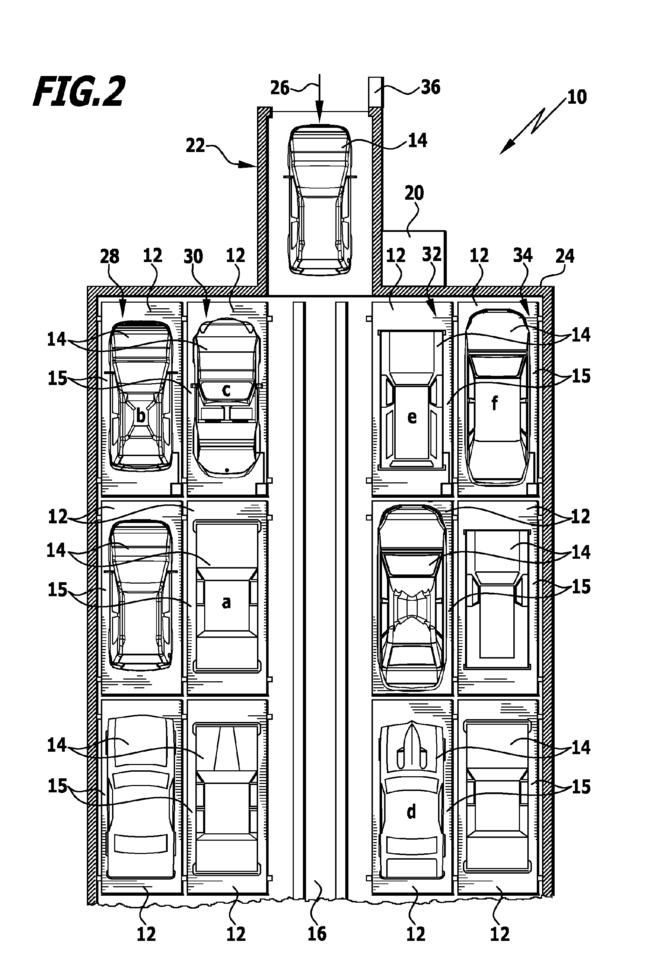

Eine erste bevorzugte Ausführungsform einer erfindungsgemäßen automatischen Parkanlage ist in den Figuren 1 und 2 in schematischer Horizontalschnittansicht abschnittsweise dargestellt und dort jeweils mit dem Bezugszeichen 10 belegt. Sie umfasst eine Vielzahl von Stellplätzen 12 für Kraftfahrzeuge 14, die jeweils auf einer Palette 15 stehend angeordnet sind. Die Stellplätze 12 sind jeweils paarweise gruppiert rechts und links einer Transportgasse 16 angeordnet, so dass rechts und links der Transportgasse 16 jeweils zwei Reihen von hintereinander angeordneten Stellplätzen 12 verlaufen. Ferner sind die Stellplätze 12 in einer gemeinsamen Ebene angeordnet, und es ist ohne weiteres möglich, dass die Parkanlage 10 Stellplätze 12 in mehr als nur einer Ebene aufweist.

In und längs der Transportgasse 16 kann ein Kraftfahrzeug 14 mittels einer Fördereinrichtung 18 verfahren werden, um das Kraftfahrzeug 14 zu einem der Stellplätze 12 zu transportieren und darin abzustellen. Umfasst die Parkanlage 10 mehr als nur eine Ebene von Stellplätzen 12, kann die Fördereinrichtung 18 zusätzlich als Vertikalförderer ausgebildet sein.

Die Fördereinrichtung 18 ist von einer Steuereinrichtung 20 ansteuerbar, und mittels ihr kann das Kraftfahrzeug 14 auch von einem Übergabebereich 22 abgeholt und dorthin gebracht werden, welcher an einer Stirnseite 24 der Parkanlage 10 angeordnet ist. Der Übergabebereich 22 kann von einem Benutzer eines der Kraftfahrzeuge 14 aus einer Zufahrtsrichtung 26 befahren werden.

Von den Stellplätzen 12 sind jeweils zwei Stellplätze 28 und 30 links sowie zwei Stellplätze 32 und 34 rechts der Transportgasse 16, die in Längsrichtung der Parkanlage 10 an deren Stirnseite 24 angeordnet sind, als Stellplätze mit Lademöglichkeit ausgestattet. Dies wird nachfolgend noch erläutert. Handelt es sich bei den Kraftfahrzeugen 14 um solche, die zumindest teilweise elektrisch betrieben werden können, kann deren jeweiliger Energiespeicher für den jeweiligen Antrieb dann, wenn die Kraftfahrzeuge 14 in einem der Stellplätze 28 bis 34 angeordnet sind, auf unten stehend beschriebene Weise geladen werden. Vorliegend sind aus der Menge der Kraftfahrzeuge 14 die Kraftfahrzeuge a bis f zumindest teilweise elektrisch betrieben, es kann sich hierbei um reine Elektrofahrzeuge handeln oder auch um Kraftfahrzeuge mit einem Hybridantrieb, die über einen elektrischen Antrieb hinaus auch noch einen Antrieb mit einem Verbrennungsmotor umfassen. Der Energiespeicher der Kraftfahrzeuge a bis f ist vorliegend jeweils ein Akkumulator, der nachfolgend vereinfacht als (wiederaufladbare) "Batterie" bezeichnet wird.

Die übrigen der Kraftfahrzeuge 14 sind ausschließlich mit Verbrennungsmotor betriebene Kraftfahrzeuge, und die übrigen der Stellplätze 12 sind ohne Lademöglichkeit für die Kraftfahrzeuge a bis f ausgestattet.

Somit kann die Verweildauer der Kraftfahrzeuge a bis f in der Parkanlage 10 zumindest teilweise dazu genutzt werden, deren Batterie in einem der Stellplätze 28 bis 34 aufzuladen. Hierzu kann von einem Benutzer bei der Übergabe des jeweiligen Kraftfahrzeuges an einer am Übergabebereich 22 angeordneten Bedieneinrichtung 36, die mit der Steuereinrichtung 20 in Wirkverbindung steht, dieser eine entsprechende Anweisung übermittelt werden. Daraufhin kann das Kraftfahrzeug im Übergabebereich 22 von der Fördereinrichtung 18 abgeholt, zu einem der Stellplätze 28 bis 34 transportiert und darin, soweit frei, abgestellt werden. Ist dies erfolgt, kann die Batterie des Kraftfahrzeuges 14 auf nachfolgend beschriebene Weise geladen werden.

Bei der in den Figuren 1 und 2 dargestellten Parkanlage 10 waren zum Zeitpunkt des Einstellens der Kraftfahrzeuge a, b, d und f die Stellplätze 28, 30, 32 bzw. 34 nicht belegt. Die Kraftfahrzeuge a, b, d und f konnten daher unmittelbar nach der Übergabe im Übergabebereich 22 mittels der Fördereinrichtung 18 zu den Stellplätzen 28, 30, 32 bzw. 34 transportiert und darin abgestellt werden, um das Laden der jeweiligen Batterie zu beginnen.

Demgegenüber wurden die Kraftfahrzeuge c und e jeweils zu einem Zeitpunkt in die Parkanlage 10 eingestellt, zu dem keiner der Stellplätze 28 bis 34 frei war. Aus diesem Grund wurde die Fördereinrichtung 18 von der Steuereinrichtung 20 dahingehend angesteuert, die Kraftfahrzeuge c und e jeweils in einem der Stellplätze 12 ohne Lademöglichkeit einzustellen, d.h. sie dahin zu transportieren und darin abzustellen. Erst nach Freiwerden eines der Stellplätze 28 bis 34, etwa nach dem Beenden der Ladevorgänge für eines der Kraftfahrzeuge a, b, d und f, können die Kraftfahrzeuge c und e von ihrem jeweiligen Stellplatz 12 abgeholt und zu einem der Stellplätze 28 bis 34 transportiert und darin eingestellt werden.

Vorliegend wurde nach dem Beenden des Ladens der Batterie von Kraftfahrzeug a dieses aus dem Stellplatz 28 abgeholt und in einen der Stellplätze 12 ohne Lademöglichkeit eingestellt. Das Kraftfahrzeug b wurde in den auf Weise frei werdenden Stellplatz 28 vom Stellplatz 30 bewegt, und das Kraftfahrzeug c wurde in den auf diese Weise frei werdenden Stellplatz 30 eingestellt (Figur 2).

In entsprechender Weise wurde das Kraftfahrzeug d nach dem Ende des Ladevorgangs mittels der Fördereinrichtung 18 in einen der Stellplätze 12 ohne Lademöglichkeit eingestellt und insbesondere mit dem Kraftfahrzeug e vertauscht, so dass dieses im Stellplatz 32 eingestellt wurde. Das Kraftfahrzeug f verblieb im Stellplatz 34.

Für derartige Umsetzungen von Kraftfahrzeugen 14, wie sie vorstehend beschrieben sind, weist die Parkanlage 10 in bekannter Weise in der Zeichnung nicht dargestellte Leerplätze auf, in denen die Kraftfahrzeuge 14 mit ihren Paletten 15 zwischengeparkt werden können, um nach und nach mittels der Fördereinrichtung 18 umgesetzt zu werden.

Die tatsächliche Ladedauer der jeweiligen Batterie eines der Kraftfahrzeuge a bis f in den Stellplätzen 28 bis 34 kann von der Steuereinrichtung 20 beispielsweise bestimmt werden in Abhängigkeit von einer von einem Benutzer vorgegebenen Ladedauer für die jeweilige Batterie und/oder einer von einem Benutzer vorgegebenen Abholzeit für das jeweilige Kraftfahrzeug a bis f und/oder einer von einem Benutzer vorgegebenen Parkdauer für das jeweilige Kraftfahrzeug a bis f und/oder einer der jeweiligen Batterie zuzuführenden Energiemenge und/oder einem Geldbetrag entsprechend einer der jeweiligen Batterie zuzuführenden Energiemenge und/oder einer Berechtigung des Benutzers zur Nutzung der Lademöglichkeit der Parkanlage 10 und/oder einem Ladezustand der jeweiligen Batterie.

In entsprechender Weise kann die Belegung der Stellplätze 28 bis 34 mit Kraftfahrzeugen 14 und insbesondere mit den Kraftfahrzeugen a bis f von der Steuereinrichtung 20 beispielsweise bestimmt werden in Abhängigkeit von einer jeweiligen tatsächlichen Ladedauer für die jeweilige Batterie eines der Kraftfahrzeuge a bis f und/oder einer Prioritätsregelung, die einem der Kraftfahrzeuge a bis f Vorrang beim Laden vor den anderen der Kraftfahrzeuge a bis f regelt und/oder einem Benutzerprofil eines die Parkanlage 10 benutzenden Benutzers und/oder einem Typ der Kraftfahrzeuge a bis f und/oder einer möglichst geringen Anzahl an Umsetzungen von Kraftfahrzeugen 14 zwischen Stellplätzen 12 der Parkanlage 10 mittels der Fördereinrichtung 18 und/oder einer Tages- oder Nachtzeit.

Die Steuereinrichtung 20 kann die tatsächliche Ladedauer der jeweiligen Batterie und/oder die Belegung der Stellplätze 28 bis 34 insbesondere zeitabhängig, d.h. dynamisch, bestimmen, so dass die Batterien der Kraftfahrzeuge a bis f entsprechend den jeweiligen Anweisungen von deren Benutzern geladen werden. Die Bestimmung der tatsächlichen Ladedauern und/oder der Belegung der Stellplätze 28 bis 34 kann etwa in regelmäßigen Zeitintervallen neu erfolgen und zusätzlich dann, wenn ein weiteres Kraftfahrzeug 14 in die Parkanlage 10 einzustellen ist und/oder wenn ein Kraftfahrzeug 14 aus der Parkanlage 10 abgeholt wird.

Die Steuereinrichtung 20 kann die Belegung der Stellplätze 28 bis 34 so bestimmen, dass die Batterien der Kraftfahrzeuge a bis f mit preiswertem Strom geladen werden, zum Beispiel nachts. Zu Zeiten hohen Energiebedarfs können die Batterien der Kraftfahrzeuge a bis f auch entladen werden, falls der jeweilige Besitzer dies zulässt.

Je nach Auslastung der Stellplätze 28 bis 30 mit elektrisch betriebenen Kraftfahrzeugen 14 kann vorgesehen sein, dass in diese Stellplätze 28 bis 34 auch nicht elektrisch betriebene Kraftfahrzeuge 14 eingestellt werden können. Es kann allerdings auch vorgesehen sein, dass dies nicht erfolgen darf.

Es ist möglich, dass der Ladevorgang für eine Batterie eines der Kraftfahrzeuge a bis f unterbrochen wird.

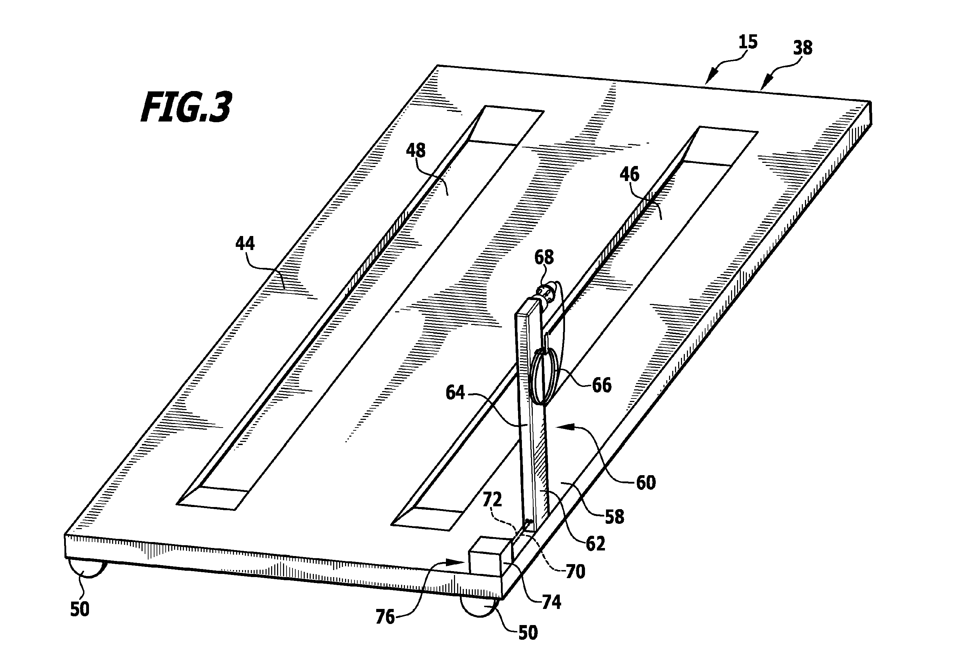

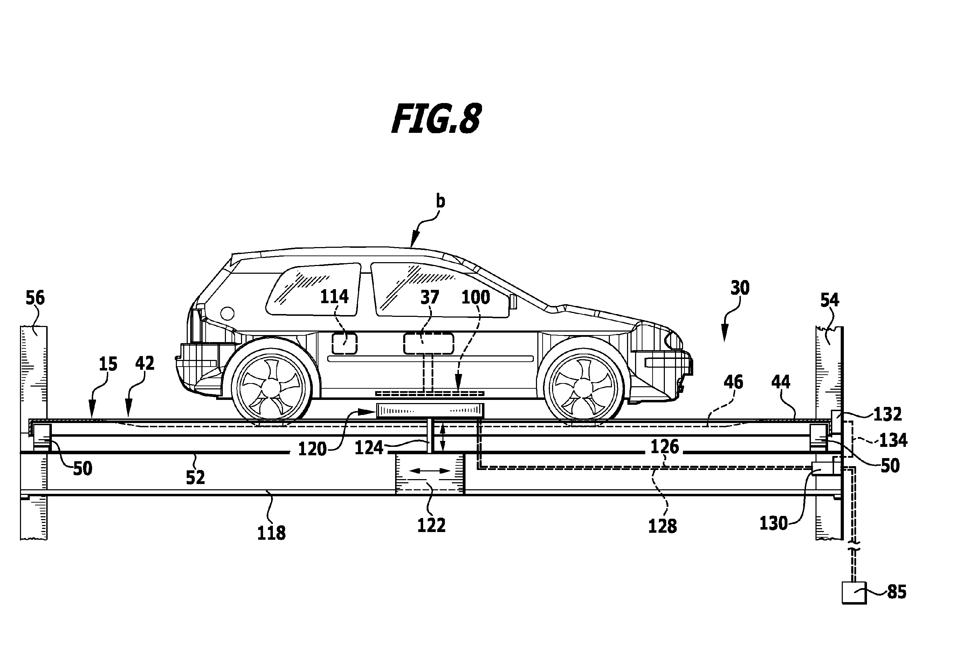

Nachfolgend wird unter Verweis auf die Figuren 3 bis 8 erläutert, wie die Batterien der Kraftfahrzeuge a bis f in den mit Lademöglichkeit versehenen Stellplätzen 28 bis 34 geladen werden können, am Beispiel des Kraftfahrzeugs b und des Stellplatzes 30, in dem dieses abgestellt ist.

Um das Laden einer Batterie 37 des Kraftfahrzeugs b im Stellplatz 30 zu ermöglichen, ist dieses auf einer Palette 15 einer Gruppe von drei möglichen Palettentypen 38, 40 oder 42 zu platzieren, die in den Figuren 3, 5 bzw. 7 schematisch perspektivisch dargestellt sind. Dies erfolgt typischerweise bereits im Übergabebereich 22.

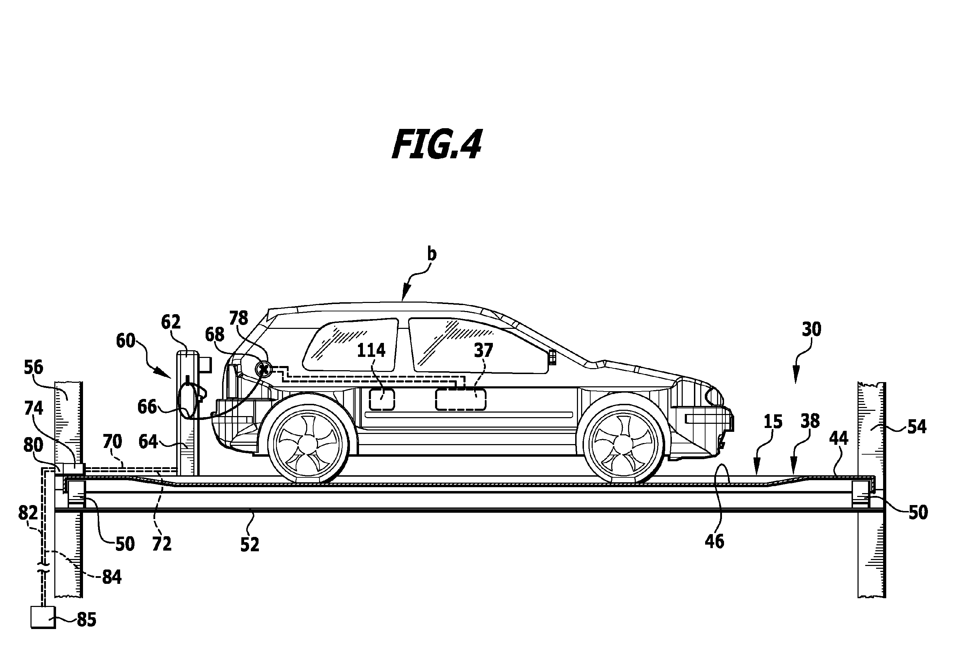

Die Palette 38 weist eine Grundplatte 44 von rechteckiger Gestalt auf mit zwei in Längsrichtung verlaufenden Radmulden 46 und 48, in denen jeweils ein Vorder- sowie ein Hinterrad des Kraftfahrzeuges b angeordnet werden kann. An der Unterseite sind an der Grundplatte 44 Laufrollen 50 gehalten, die jeweils um eine in Längsrichtung der Palette 38 verlaufende Drehachse frei drehbar sind. Mittels der Fördereinrichtung 18 kann die Palette 38 quer zur Richtung der Transportgasse 16 in den Stellplatz 30 hinein geschoben und dort abgestellt werden. Dabei rollen die Laufrollen 50 auf einem horizontalen Träger 52 des Stellplatzes 30 ab, der endseitig von vertikalen Trägern 54 und 56 des Stellplatzes 30 gehalten ist (Figur 4). Zur Arretierung der Palette 38 relativ zum Träger 52 kann dieser Radmulden für die Laufrollen 50 ausbilden.

Auf der Oberseite der Palette 38 ist nahe deren Rand 58 eine Ladeeinrichtung 60 für das Kraftfahrzeug b angeordnet und insbesondere darauf gehalten. Die Ladeeinrichtung 60 umfasst ein Halteelement 62 in Form eines Pfostens 64, an dem ein Ladekabel 66 in Form eines Stromkabels mit einem endseitig angeordneten Stecker 68 gehalten ist. Das Ladekabel 66 steht über zwei Leitungen 70 und 72 mit einem Kontaktelement 74 an einem Eckbereich 76 der Grundplatte 44 in elektrischer Verbindung. Das Kontaktelement 74 kann auch an der Unterseite der Palette 38 angeordnet sein.

Bei der Übergabe des Kraftfahrzeuges b im Übergabebereich 22 kann der Benutzer den Stecker 68 mit einem zu ihm komplementär ausgestalteten Gegenstecker 78 des Kraftfahrzeuges b verbinden. Der Gegenstecker 78 steht mit der Batterie 37 über elektrische Leitungen in Wirkverbindung.

Oberhalb des Trägers 52 ist am Träger 56 ein weiteres Kontaktelement 80 des Stellplatzes 30 gehalten. Das Kontaktelement 80 steht über zwei Leitungen 82 und 84 mit einer Energiequelle in Form einer Stromquelle 85 in elektrischer wirksamer Verbindung.

Wird die Palette 38 von der Fördereinrichtung 18 im Stellplatz 30 abgestellt, können die Kontaktelemente 70 und 80 zusammenwirken. Dadurch wird ein Kontakt geschlossen zwischen der Ladeeinrichtung 60 und der Stromquelle 85, so dass die Ladeeinrichtung 60 mit Energie und insbesondere Strom beaufschlagt werden kann. Auf diese Weise kann auch über das Ladekabel 66 und den Stecker 68 die Batterie 37 mit Energie und insbesondere Strom beaufschlagt werden und dadurch geladen werden.

Der automatische Kontaktschluss zwischen den Kontaktelementen 74 und 80 sorgt für eine besonders einfache konstruktive Ausgestaltung der Parkanlage 10 und einen zuverlässigen Ablauf des Ladevorganges. Wird die Palette 38 mittels der Fördereinrichtung 18 wieder aus dem Stellplatz 30 entfernt, wird der Kontakt zwischen den Kontaktelementen 74 und 80 automatisch unterbrochen, und die Batterie 37 des Kraftfahrzeuges b wird nicht weiter geladen, so dass der Ladevorgang beendet ist.

Zum Schutz vor Feuchtigkeit und Schmutz können die Kontaktelemente 74 und 80 mit Schutzelementen, beispielsweise Kappen, versehen sein, welche beim Einstellen der Palette 38 in den Stellplatz 30 geöffnet werden und die eigentlichen elektrischen Kontakte so freigeben, dass Strom von der Stromquelle 85 zur Ladeeinrichtung 60 fließen kann.

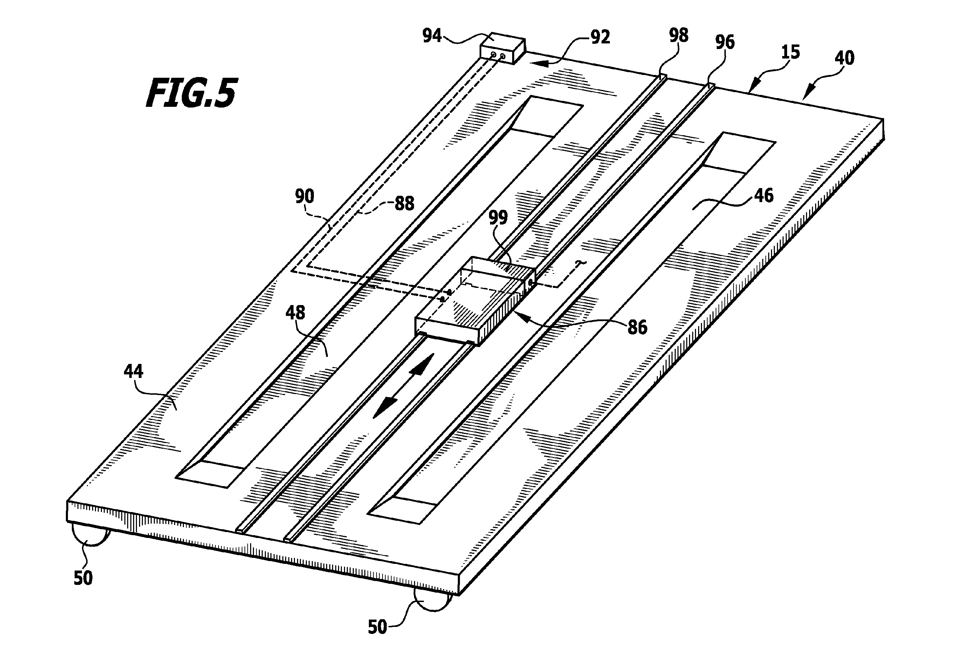

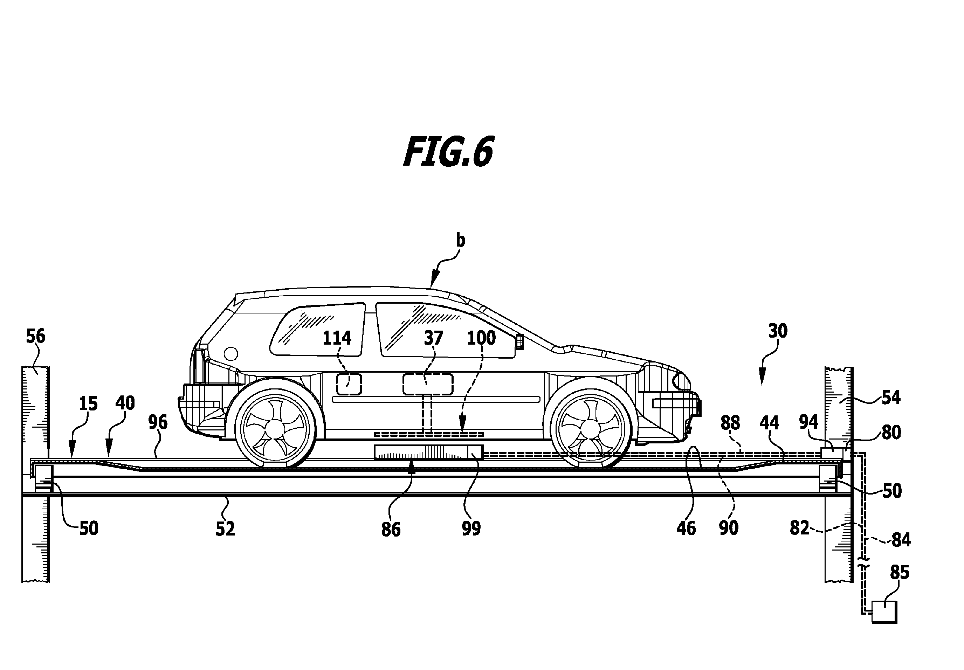

Die in Figur 5 schematisch perspektivisch dargestellte Palette 40 umfasst ebenso wie die Palette 38 die Grundplatte 44 mit den Radmulden 46 und 48 sowie die Laufrollen 50 an der Unterseite. Sie kann ebenfalls mittels der Fördereinrichtung 18 quer zur Erstreckung der Transportgasse 16 in den Stellplatz 30 eingeführt und darin abgestellt werden (Figur 6).

Zwischen den Radmulden 46 und 48 umfasst die Palette 40 eine Ladeeinrichtung 86, die zum berührungslosen Laden der Batterie 37 des Kraftfahrzeuges b ausgebildet ist. Vorliegend ist die Ladeeinrichtung 86 auf der Grundplatte 44 angeordnet, es ist jedoch auch möglich, dass sie zwischen die Radmulden 46 und 48 ungefähr in der durch die Grundplatte 44 definierten Ebene angeordnet ist und über diese im wesentlichen nicht hinausragt.

Die Ladeeinrichtung 86 umfasst mindestens eine in der Zeichnung nicht dargestellte Primärspule, mit der ein Magnetfeld senkrecht zu der durch die Grundplatte 44 definierten Ebene erzeugbar ist. Die mindestens eine Primärspule steht über zwei Leitungen 88 und 90 mit einem an einem Eckbereich 92 angeordneten Kontaktelement 94 der Palette 40 in elektrisch wirksamer Verbindung, welches auch an der Unterseite der Palette 40 angeordnet sein kann.

In Längsrichtung der Palette 40 ist die Ladeeinrichtung 86 längs zweier Führungen in Form von Schienen 96 und 98 relativ zur Grundplatte 44 verschieblich ausgebildet. Das Verschieben erfolgt mittels einer Verstelleinrichtung 99, die in die Ladeeinrichtung 86 integriert ist und die beispielsweise von der Steuereinrichtung 20 ansteuerbar ist. Es kann außerdem vorgesehen sein, dass die Ladeeinrichtung 86 auch quer zur Längsrichtung der Palette 40 verschieblich ausgebildet ist sowie senkrecht zu der von der Grundplatte 44 definierten Ebene. Hierzu kann die Ladeeinrichtung 86 jeweils eine mit der Steuereinrichtung 20 in Wirkverbindung stehende zusätzliche Verstelleinrichtung umfassen.

Ist die Palette 40 im Stellplatz 30 abgestellt, so kann das Kontaktelement 94 mit dem Kontaktelement 80 zusammenwirken, welches in der Darstellung der Figur 6 am Träger 54 gehalten ist. Wie vorstehend im Fall der Palette 38 beschrieben, wird auf diese Weise zwischen den Kontaktelementen 80 und 94 ein elektrischer Kontakt geschlossen, so dass die Ladeeinrichtung 86 und insbesondere deren mindestens eine Primärspule mit Energie aus der Stromquelle 85 beaufschlagt wird.

Das von der mindestens einen Primärspule der Ladeeinrichtung 86 erzeugte Magnetfeld und insbesondere dessen Änderung kann von einer Empfangseinrichtung 100 an der Unterseite des Kraftfahrzeuges b zwischen dessen Vorder- und Hinterachse erfasst werden. Hierfür umfasst die Empfangseinrichtung 100 in bekannter Weise mindestens eine Sekundärspule, die in der Zeichnung nicht dargestellt ist. Die mindestens eine Sekundärspule steht mit der Batterie 37 des Kraftfahrzeuges b über elektrische Leitungen in Wirkverbindung. Durch Beaufschlagen der Ladeeinrichtung 86 mit einer Wechselspannung kann auf diese Weise der Empfangseinrichtung 100 und damit der Batterie 37 berührungslos induktiv Energie zugeführt werden, um die Batterie 37 aufzuladen.

Wird die Palette 40 mittels der Fördereinrichtung 18 aus dem Stellplatz 30 entfernt, wird der Kontakt zwischen den Kontaktelementen 80 und 94 automatisch unterbrochen, und der Ladevorgang wird beendet.

Die Kontaktelemente 74 und 94 der Paletten 38 beziehungsweise 40 können auch durch Empfangseinrichtungen ausgetauscht werden, über die den Ladeeinrichtungen 60 beziehungsweise 86 berührungslos Energie zugeführt werden kann. Beispielsweise enthält eine derartige Empfangseinrichtung wie die Empfangseinrichtung 100 eine Sekundärspule für induktive Energieübertragung von einer Primärspule, die in eine anstelle des Kontaktelementes 80 zum Einsatz kommende Energieübertragungseinrichtung integriert sein kann. Beim Abstellen der Palette 38 beziehungsweise 40 im Stellplatz 30 kann auf diese Weise automatisch eine magnetische Kopplung zwischen der Energieübertragungseinrichtung und der jeweiligen Empfangseinrichtung hergestellt werden und so die Batterie 37 geladen werden.

Die Verschieblichkeit der Ladeeinrichtung 86 relativ zur Grundplatte 44 hat den Vorteil, dass auf diese Weise ein möglichst großer Überlappungsbereich zwischen der Ladeeinrichtung 86 und der Empfangseinrichtung 100 erzielt werden kann. Der Überlappungsbereich ergibt sich vorliegend beispielsweise durch Projektion auf die Empfangseinrichtung 100 und die Ladeeinrichtung 86 in einer senkrecht zur Grundplatte 44 orientierten Richtung. Je größer der Überlappungsbereich, desto wirkungsvoller kann der Empfangseinrichtung 100 und damit der Batterie 37 Energie zugeführt werden, denn desto besser lässt sich mittels der Empfangseinrichtung 100 die Änderung des von der Ladeeinrichtung 86 hervorgerufenen magnetischen Flusses erfassen.

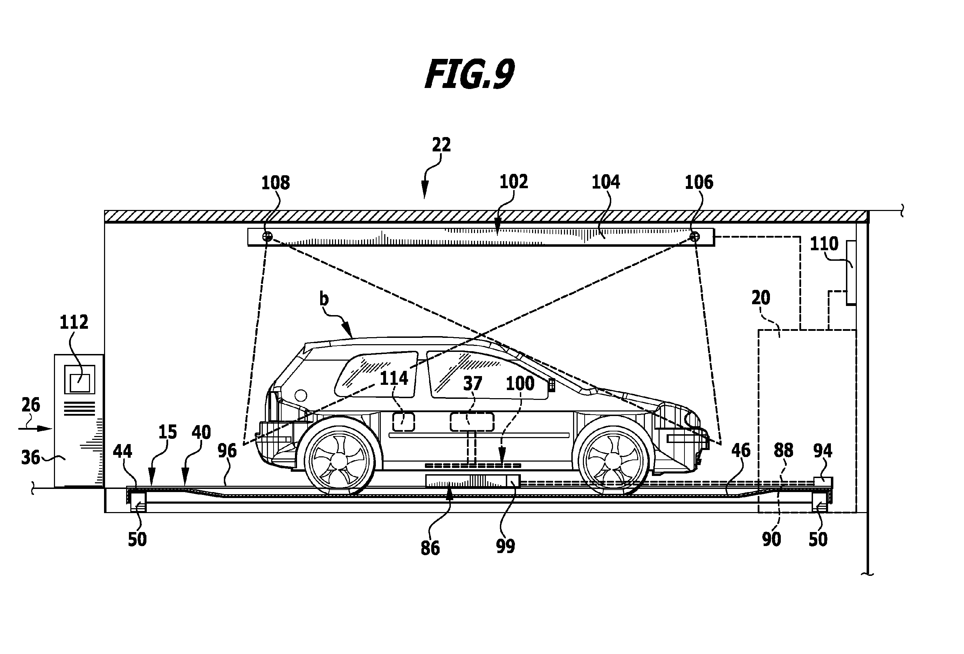

Bei der Parkanlage 10 kann eine Ausrichtung der Ladeeinrichtung 86 relativ zum Kraftfahrzeug b in einem der Stellplätze 28 bis 34 oder auch bereits im Übergabebereich 22 stattfinden (Figur 9). Darin kann die Palette 40 mittels der Fördereinrichtung 18 abgestellt werden, und der Benutzer kann das Kraftfahrzeug b in den Übergabebereich 22 in Zufahrtsrichtung 26 befahren und auf der Palette 40 abstellen. Mittels einer von der Parkanlage 10 typischerweise umfassten Erfassungseinrichtung 102 in Form einer optischen Sensoreinrichtung 104 mit zwei optischen Sensorelementen 106 und 108 kann erfasst werden, ob das Kraftfahrzeug b relativ zur Palette 40 korrekt ausgerichtet ist. Hierfür steht die Erfassungseinrichtung 102 mit der Steuereinrichtung 20 in Wirkverbindung, und gegebenenfalls kann dem Benutzer mit Hilfe einer mit der Steuereinrichtung 20 in Wirkverbindung stehenden Anzeigeeinrichtung 110 visualisiert werden, dass die Ausrichtung des Kraftfahrzeuges b relativ zur Palette 40 korrekt ist oder dass gegebenenfalls Korrekturen erfolgen müssen.

Das von der Erfassungseinrichtung 102 ausgegebene Signal kann von der Steuereinrichtung 20 auch dafür verwendet werden, die Ladeeinrichtung 86 so anzusteuern, dass sie korrekt bezüglich der Erfassungseinrichtung 102 positioniert ist. Dies erfolgt durch Verschieben der Ladeeinrichtung 86 relativ zur Grundplatte 44. Gegebenenfalls kann die Ladeeinrichtung 86, wie bereits erwähnt, auch quer zur Längsrichtung der Grundplatte 44 verschoben werden sowie senkrecht zur Grundplatte 44 angehoben werden, um so nah wie möglich an die Empfangseinrichtung 100 zu gelangen und auf diese Weise eine möglichst wirkungsvolle magnetische Kopplung zwischen der Ladeeinrichtung 86 und der Empfangseinrichtung 100 sicherzustellen.

Die Lage der Empfangseinrichtung 100 im Kraftfahrzeug b kann von der Steuereinrichtung 20 beispielsweise automatisch ermittelt werden, etwa mit Hilfe eines Berechtigungsträgers 112, den der Benutzer beim Bedienen der Bedieneinrichtung 36 an dieser platziert und auf dem Informationen betreffend das Kraftfahrzeug b gespeichert sind. Auch ein Benutzerprofil kann auf dem Berechtigungsträger 112 gespeichert sein. Möglich ist auch, dass mittels der Erfassungseinrichtung 102 ein kraftfahrzeuginterner Speicher 114 mit Informationen betreffend das Kraftfahrzeug b ausgelesen und insbesondere berührungslos ausgelesen wird.

Denkbar ist zur korrekten Positionierung der Ladeeinrichtung 86 relativ zur Empfangseinrichtung 100 auch, dass die Ladeeinrichtung 86 vorübergehend mit Energie beaufschlagt wird und relativ zum Kraftfahrzeug b bewegt wird und dass mittels der Steuereinrichtung 20 erfasst werden kann, wann der Energieübertrag von der Ladeeinrichtung 86 auf die Empfangseinrichtung 100 ein Maximum erreicht. Dadurch kann bereits vor dem eigentlichen Ladevorgang, und zwar im Übergabebereich 22 und/oder in einem der Stellplätze 28 bis 34, sichergestellt werden, dass die Batterie 37 des Kraftfahrzeuges b möglichst wirkungsvoll geladen wird, wenn die Palette 40 in einem der Stellplätze 28 bis 34 abgestellt wird.

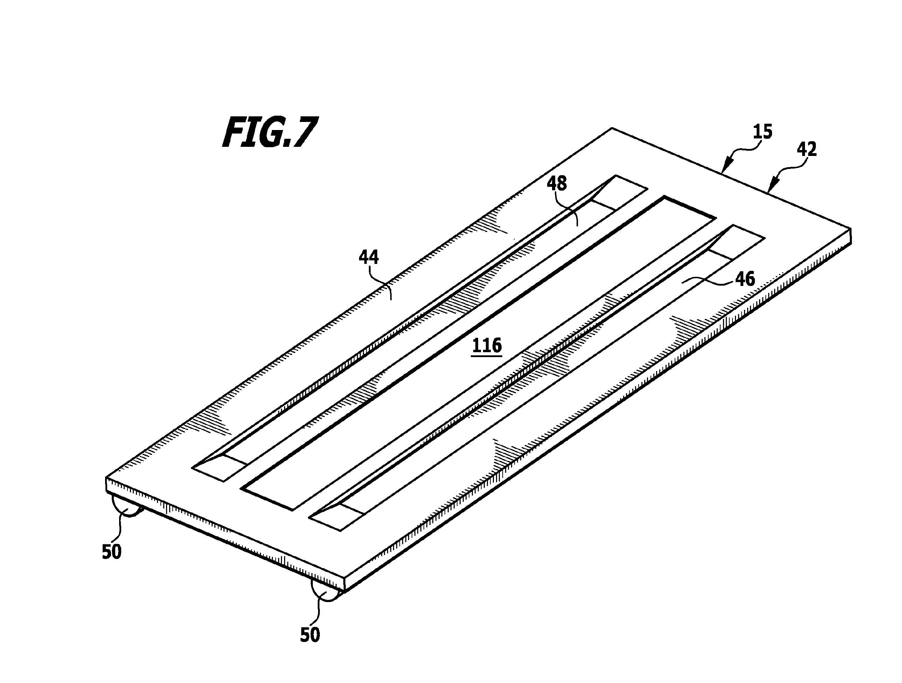

Die in der Figur 7 schematisch perspektivisch dargestellte Palette 42 umfasst ebenso wie die Palette 38 die Grundplatte 44, die Radmulden 46 und 48 sowie die an der Grundplatte 44 gehaltenen Laufrollen 50. Zwischen den Radmulden 46 und 48 ist eine rechteckförmige längserstreckte Durchgangsöffnung 116 in der Grundplatte 44 gebildet. Eine Ladeeinrichtung ist auf der Palette 42 nicht angeordnet.

Um ein Laden des Kraftfahrzeuges b auf der Palette 42 zu ermöglichen, ist am Stellplatz 30 unterhalb des Trägers 52 zwischen den vertikalen Trägern 54 und 56 ein weiterer horizontaler Träger 118 angeordnet, auf dem eine Ladeeinrichtung 120 beweglich und insbesondere verschieblich relativ zur Palette 42 gehalten ist. Mittels einer ersten Verstelleinrichtung 122 kann die Ladeeinrichtung 120 in Längsrichtung der Palette 42 verschoben werden, und mittels einer an dieser festgelegten zweiten Verstelleinrichtung 124, an deren Oberseite die Ladeeinrichtung 120 festgelegt ist, kann diese senkrecht zur Grundplatte 44 bewegt werden. Die Verstelleinrichtungen 122 und 124 sind von der Steuereinrichtung 20 ansteuerbar.

Die Ladeeinrichtung 120 steht über Leitungen 126 und 128 mit der Stromquelle 85 in elektrischer Verbindung. In die Leitungen 126 und 128 ist ein Schaltelement 130 geschaltet, das mit einem Sensorelement 132 am Träger 54 über eine Leitung 134 in Wirkverbindung steht. Das Sensorelement 132 ist Teil einer Sensoreinrichtung, mittels derer erfasst werden kann, dass die Palette 42 und das Kraftfahrzeug b mittels der Fördereinrichtung 18 in korrekter Weise im Stellplatz 30 abgestellt wurden. Ist dies der Fall, kann mittels eines vom Sensorelement 132 ausgegebenen Signals das Schaltelement 130 betätigt werden, so dass die Ladeeinrichtung 120 mit Energie und insbesondere mindestens eine von dieser umfasste Primärspule mit Strom beaufschlagt wird. Wie im Fall der Ladeeinrichtung 86 kann der Empfangseinrichtung 100 mittels der Ladeeinrichtung 120 berührungslos induktiv Energie zugeführt werden, um die Batterie 37 des Kraftfahrzeuges b aufzuladen, während die Palette 42 im Stellplatz 30 angeordnet ist. Wird die Palette 42 aus dem Stellplatz 30 entfernt, kann dies vom Sensorelement 132 erfasst werden, so dass anhand dessen Signals das Schaltelement 130 die Beaufschlagung der Ladeeinrichtung 120 mit Energie unterbricht.

Mittels der Verstelleinrichtungen 122 und 124 kann die Ladeeinrichtung 120 bereits vor dem Laden der Batterie 37 relativ zur Empfangseinrichtung 100 so ausgerichtet werden, dass eine wirkungsvolle Energieübertragung von der Ladeeinrichtung 120 zur Empfangseinrichtung 100 erfolgt. Dabei kann die Ladeeinrichtung 120 insbesondere nach oben bis durch die Durchgangsöffnung 116 der Grundplatte 44 hindurch nah an das Kraftfahrzeug b angehoben werden, um eine möglichst effektive magnetische Kopplung zu erzielen.

Wo genau die Ladeeinrichtung 120 relativ zur Empfangseinrichtung 100 zu positionieren ist, lässt sich beispielsweise mit Hilfe der auf dem Berechtigungsträger 112 oder im Speicher 114 hinterlegten Kraftfahrzeuginformationen ermitteln, woraufhin die Verstelleinrichtungen 122 und 124 in geeigneter Weise von der Steuereinrichtung 20 angesteuert werden können. Es kann ferner vorgesehen sein, dass mittels der vorstehend genannten Sensoreinrichtung die Position des Kraftfahrzeuges b und damit der Empfangseinrichtung 100 im Stellplatz 30 erfasst und daraufhin die Verstelleinrichtungen 122 und 124 entsprechend angesteuert werden. Es ist auch möglich, dass erfasst wird, welche elektrische Leistung von der Empfangseinrichtung 100 aufgenommen wird, und dass die Ladeeinrichtung 120 so lange relativ zum Kraftfahrzeug b verschoben wird, bis die elektrische Leistung ihr Maximum erreicht.

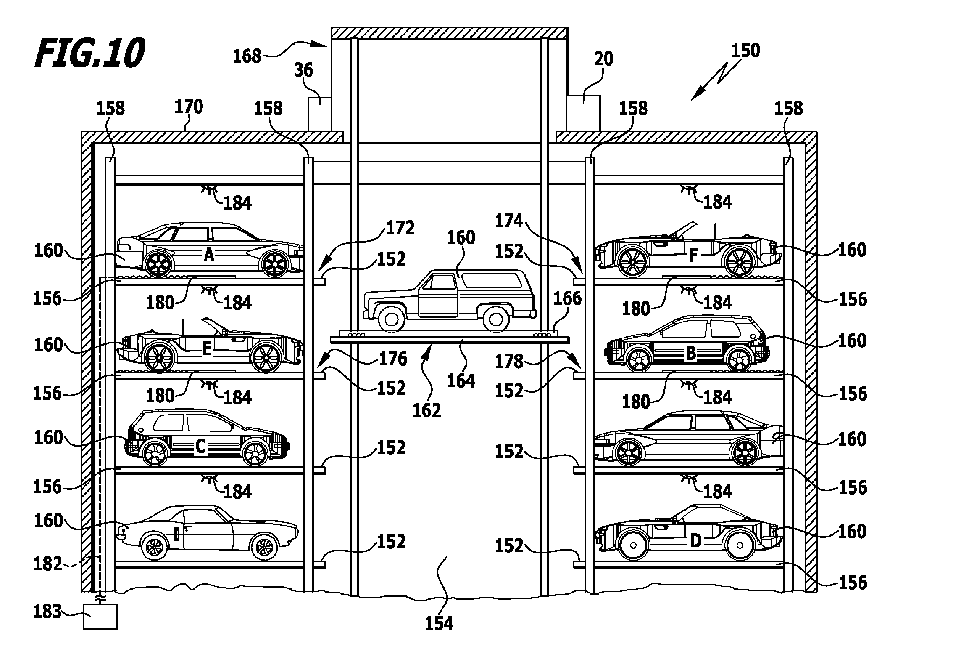

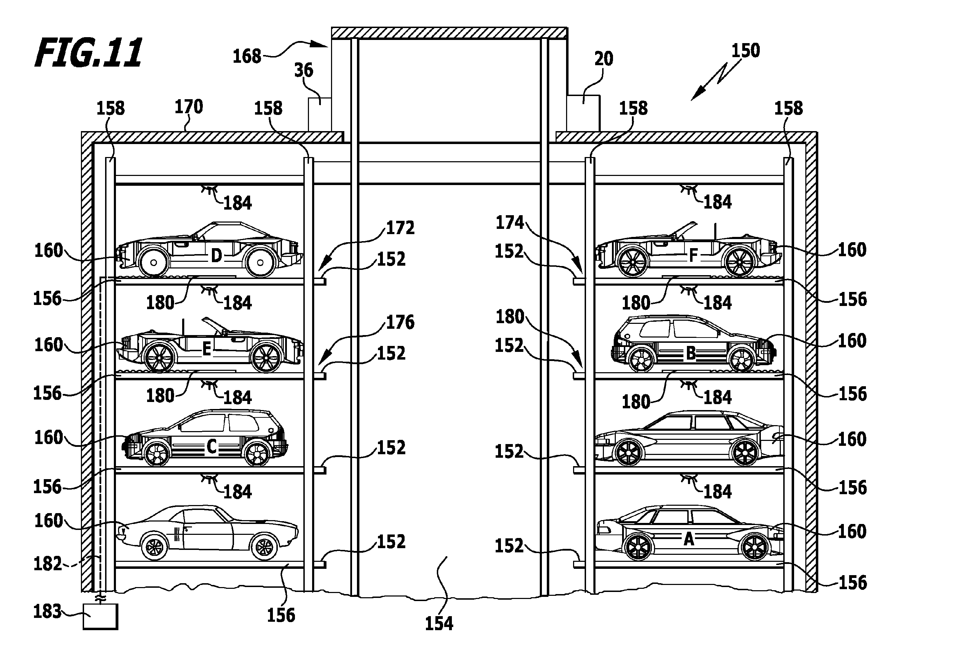

Eine zweite bevorzugte Ausführungsform einer erfindungsgemäßen Parkanlage ist in den Figuren 10 und 11 in vertikaler Schnittansicht schematisch abschnittsweise dargestellt und dort jeweils mit dem Bezugszeichen 150 belegt. Sie umfasst eine Vielzahl von Stellplätzen 152, die jeweils übereinander rechts und links von einem zentralen vertikalen Förderschacht 154 angeordnet sind. Jeder Stellplatz 152 wird gebildet durch einen horizontalen Träger 156 mit einer Standfläche, welcher zwischen vertikalen Trägern 158 gehalten ist. Auf diese Weise wird diesseits und jenseits des Förderschachtes 154 jeweils eine regalartige Struktur von Stellplätzen 152 gebildet.

Kraftfahrzeuge 160 können auf dem horizontalen Träger 156 abgestellt werden. Zum Transport der Kraftfahrzeuge 160 dient eine im Förderschacht 154 angeordnete Fördereinrichtung 162 mit einem Aufzug 164 sowie einer Horizontalverschiebeeinheit 166, wie sie beispielsweise in der DE 20 2004 018 058 U1 beschrieben ist.

Mittels der Fördereinrichtung 162 kann ein Kraftfahrzeug 160 in einem Übergabebereich 168 an einer Oberseite 170 der Parkanlage 150 abgeholt und auch wieder dorthin nach Ablauf der Parkzeit zurückgebracht werden. Die Parkanlage 150 weist zur Ansteuerung der Fördereinrichtung 162 ebenfalls die Steuereinrichtung 20 auf, und der Übergabebereich 168 umfasst die Bedieneinrichtung 36.

Auch bei der Parkanlage 150 können elektrisch betriebene Kraftfahrzeuge 160, es sind dies vorliegend die Kraftfahrzeuge A bis F, auf mit Lademöglichkeit versehenen Stellplätzen 172 bis 178 abgestellt werden, so dass ihre jeweilige Batterie im Stellplatz geladen werden kann. Hierfür kann jedes der Kraftfahrzeuge A bis F mittels der Fördereinrichtung 162 zu einem der Stellplätze 172 bis 178 transportiert und mittels der Verschiebeeinheit 166 horizontal verschoben und so in dem jeweiligen Stellplatz abgestellt werden.

Im Fall der Figur 10 sind die Kraftfahrzeuge A, F, E und B in den Stellplätzen 172, 174, 176 bzw. 178 abgestellt, und die Kraftfahrzeuge C und D sind auf nicht mit Lademöglichkeit versehenen Stellplätzen 152 abgestellt. Somit können die Batterien der Kraftfahrzeuge A, F, E und B geladen werden.

Figur 11 zeigt die Parkanlage 150 zu einem späteren Zeitpunkt, nachdem die Kraftfahrzeuge A und D gegeneinander und die Kraftfahrzeuge B und C gegeneinander mittels der Fördereinrichtung 162 ausgetauscht wurden. Dies ermöglicht auch das Laden der Batterien der Kraftfahrzeuge B und D. Die Batterien der Kraftfahrzeuge E und F werden weiterhin geladen.

Die Stellplätze 172 bis 178 umfassen jeweils eine induktive Ladeeinrichtung 180, die auf dem horizontalen Träger 156 festgelegt ist und die jeweils über eine Leitung 182 mit einer Energiequelle und insbesondere Stromquelle 183 in Wirkverbindung steht. Dies ist nur für den Stellplatz 172 gezeigt. Wird ein Kraftfahrzeug 160 in einem der Stellplätze 172 bis 178 abgestellt, kann dies jeweils mittels einer Sensoreinrichtung 184 erfasst werden, woraufhin die Beaufschlagung der Ladeeinrichtung 180 mit Energie und insbesondere Strom aktiviert wird. Insbesondere ist es auch möglich, dass der mittels der Sensoreinrichtung 184 ermittelt wird, ob es sich bei dem Kraftfahrzeug 160 überhaupt um ein elektrisch betriebenes Kraftfahrzeug handelt, also beispielsweise vorliegend um eines der Kraftfahrzeuge A bis F. Auch die korrekte Positionierung der Kraftfahrzeuge 160 relativ zu den Stellplätzen 172 bis 178 kann mittels der Sensoreinrichtung 184 erfasst werden.

Werden die Ladeeinrichtungen 180 mit Strom beaufschlagt, kann den Kraftfahrzeugen A bis F entsprechend der vorstehend beschriebenen Weise berührungslos und insbesondere induktiv Energie zugeführt werden, um ihre jeweilige Batterie aufzuladen. Die Ladeeinrichtungen 180 können relativ zu den Kraftfahrzeugen 160 verstellbar ausgebildet sein und beispielsweise anhand eines Signals der jeweiligen der Sensoreinrichtungen 184 verstellt werden. Die Ladedauern für die Batterien der Kraftfahrzeuge A bis F sowie die Belegung der Stellplätze 172 bis 178 können mittels der Steuereinrichtung 20 bei der Parkanlage 150 in gleicher Weise bestimmt und optimiert werden wie im Fall der Parkanlage 10, so dass diesbezüglich auf die vorstehende Beschreibung verwiesen werden kann.

## Patentansprüche

1. Verfahren zum Betreiben einer automatisierten Parkanlage mit einer Mehrzahl von Stellplätzen für Kraftfahrzeuge, wobei ein Kraftfahrzeug nach Übergabe durch einen Benutzer in einem Übergabebereich mittels einer Fördereinrichtung zu einem Stellplatz transportiert und darin abgestellt werden kann, **dadurch gekennzeichnet, dass** mindestens ein Stellplatz mit einer Lademöglichkeit für einen Energiespeicher eines zumindest teilweise elektrisch betriebenen Kraftfahrzeuges vorgesehen ist und dass das Kraftfahrzeug mittels der Fördereinrichtung zu einem Stellplatz mit Lademöglichkeit transportiert und darin abgestellt wird und dann der Energiespeicher geladen wird.

2. Verfahren nach Anspruch 1, **dadurch gekennzeichnet, dass** das Kraftfahrzeug auf einer Palette positioniert wird, die mittels der Fördereinrichtung zum Stellplatz transportiert und darin abgestellt wird und dass eine Ladeeinrichtung für den Energiespeicher bei im Stellplatz angeordneter Palette aktiviert wird.

3. Verfahren nach Anspruch 2, **dadurch gekennzeichnet, dass** das Kraftfahrzeug auf einer mit einer Ladeeinrichtung für den Energiespeicher ausgestatteten Palette positioniert wird.

4. Verfahren nach Anspruch 3, **dadurch gekennzeichnet, dass** die Ladeeinrichtung beim Abstellen der Palette im Stellplatz berührungslos mit Energie beaufschlagt wird.

5. Verfahren nach einem der voranstehenden Ansprüche, **dadurch gekennzeichnet, dass** das Kraftfahrzeug in Ermangelung eines freien mit einer Lademöglichkeit versehenen Stellplatzes mittels der Fördereinrichtung zu einem nicht mit einer Lademöglichkeit ausgestatteten Stellplatz transportiert und darin abgestellt wird und dass nach Freiwerden eines Stellplatzes mit Lademöglichkeit das Kraftfahrzeug mittels der Fördereinrichtung dorthin transportiert und darin abgestellt wird und dann der Energiespeicher geladen wird.

6. Verfahren nach einem der voranstehenden Ansprüche, **dadurch gekennzeichnet, dass** eine tatsächliche Ladedauer für den Energiespeicher bestimmt wird in Abhängigkeit von einer von einem Benutzer vorgegebenen Ladedauer und/oder einer von einem Benutzer vorgegebenen Abholzeit für das Kraftfahrzeug und/oder einer von einem Benutzer vorgegebenen Parkdauer für das Kraftfahrzeug und/oder einer dem Energiespeicher zuzuführenden Energiemenge und/oder einem Geldbetrag entsprechend einer dem Energiespeicher zuzuführenden Energiemenge und/oder einer Berechtigung des Benutzers zur Nutzung der Lademöglichkeit der Parkanlage und/oder einem Ladezustand des Energiespeichers.

7. Verfahren nach einem der voranstehenden Ansprüche, **dadurch gekennzeichnet, dass** eine Belegung mit Kraftfahrzeugen von einem oder mehreren mit einer Lademöglichkeit versehenen Stellplätzen der Parkanlage bestimmt wird in Abhängigkeit von einer jeweiligen tatsächlichen Ladedauer für den Energiespeicher des Kraftfahrzeuges und/oder einer Vorschrift, die den Vorrang eines Kraftfahrzeuges zum Laden dessen Energiespeichers vor anderen Kraftfahrzeugen regelt und/oder einem Benutzerprofil eines die Parkanlage benutzenden Benutzers und/oder einem Kraftfahrzeugtyp und/oder einer möglichst geringen Anzahl an Umsetzungen von Kraftfahrzeugen zwischen Stellplätzen der Parkanlage mittels der Fördereinrichtung und/oder einer Tages- oder Nachtzeit.

8. Verfahren nach einem der voranstehenden Ansprüche, **dadurch gekennzeichnet, dass** im Übergabebereich eine Relativausrichtung des Kraftfahrzeuges und einer Palette, auf der es mittels der Fördereinrichtung transportierbar ist, zueinander und/oder eine Relativausrichtung des Kraftfahrzeuges und einer an der Palette angeordneten Ladeeinrichtung für den Energiespeicher zueinander vorgenommen wird.

9. Verfahren nach einem der voranstehenden Ansprüche, **dadurch gekennzeichnet, dass** im Stellplatz eine Relativausrichtung des Kraftfahrzeuges und einer am Stellplatz angeordneten Ladeeinrichtung zueinander vorgenommen wird und/oder dass das Kraftfahrzeug relativ zum Stellplatz mit daran angeordneter Ladeinrichtung ausgerichtet wird.

10. Automatisierte Parkanlage (10; 150), umfassend eine Mehrzahl von Stellplätzen (12, 28, 30, 32, 34; 152, 174, 176, 178, 180) zum Abstellen von Kraftfahrzeugen (14, a-f; 160, A-F), einen Übergabebereich (22; 168) für ein Kraftfahrzeug (14, a-f; 160, A-F), eine Fördereinrichtung (18; 162), mit der ein Kraftfahrzeug (14, a-f; 160, A-F) vom Übergabebereich (22; 168) zu einem Stellplatz (12, 28, 30, 32, 34; 152, 174, 176, 178, 180) transportierbar und darin abstellbar ist, sowie eine Steuereinrichtung (20) für die Fördereinrichtung (18; 162), **dadurch gekennzeichnet, dass** die Parkanlage (10; 150) mindestens eine Ladeeinrichtung (60, 86, 120; 180) für einen Energiespeicher (37) eines zumindest teilweise elektrisch betriebenen Kraftfahrzeuges (a-f; A-F) sowie mindestens einen mit einer Lademöglichkeit für den Energiespeicher (37) versehenen Stellplatz (28, 30, 32, 34; 174, 176, 178, 180) umfasst und dass das Kraftfahrzeug (a-f; A-F) in Folge einer der Steuereinrichtung (20) übermittelbaren Anweisung mittels der Fördereinrichtung (18; 162) zum Stellplatz (28, 30, 32, 34; 174, 176, 178, 180) transportierbar und darin abstellbar ist, wobei die mindestens eine Ladeeinrichtung (60, 86, 120; 180) bei im Stellplatz (28, 30, 32, 34; 174, 176, 178, 180) abgestelltem Kraftfahrzeug (a-f; A-F) mit Energie beaufschlagbar ist.

11. Parkanlage nach Anspruch 10, **dadurch gekennzeichnet, dass** mindestens eine Ladeeinrichtung (180) auf einer Standfläche (156) des Stellplatzes (174, 176, 178, 180) für das Kraftfahrzeug (A-F) angeordnet ist.

12. Parkanlage nach Anspruch 10 oder 11, **dadurch gekennzeichnet, dass** die Parkanlage (10) mindestens eine Palette (15, 38, 40, 42) für das Kraftfahrzeug (a-f) aufweist, auf der dieses mittels der Fördereinrichtung (18) transportierbar und im Stellplatz (28, 30, 32, 34) abstellbar ist und dass mindestens eine Ladeeinrichtung (60, 86) an der Palette (15, 38, 40, 42) gehalten ist.

13. Parkanlage nach Anspruch 12, **dadurch gekennzeichnet, dass** die Parkanlage (10) eine mit der Ladeeinrichtung (60, 86) zusammenwirkende Energieübertragungseinrichtung aufweist, mittels derer der Ladeeinrichtung (60, 86) beim Abstellen der Palette (15, 38, 40) im Stellplatz (28, 30, 32) berührungslos Energie zuführbar ist.

14. Parkanlage nach einem der Ansprüche 10 bis 13, **dadurch gekennzeichnet, dass** mindestens eine Ladeeinrichtung (120) am Stellplatz (28, 30, 32, 34) an einem diesem zugeordneten Träger (118) gehalten ist und dass das Kraftfahrzeug (a-f) auf einer Palette (15, 38, 40, 42) im Stellplatz (28, 30, 32, 34) abstellbar ist.

15. Parkanlage nach einem der Ansprüche 10 bis 14, **dadurch gekennzeichnet, dass** mindestens eine Ladeeinrichtung (86, 120; 180) zum berührungslosen Laden des Energiespeichers (37) ausgebildet ist.

16. Parkanlage nach einem der Ansprüche 10 bis 15, **dadurch gekennzeichnet, dass** die Parkanlage (10; 150) mindestens eine von der Steuereinrichtung (20) ansteuerbare Verstelleinrichtung für mindestens eine Ladeeinrichtung (86, 120; 180) umfasst zum Bewegen der Ladeeinrichtung (86, 120; 180) relativ zum Kraftfahrzeug (a-f; A-F) in mindestens einer Raumrichtung.

17. Parkanlage nach einem der Ansprüche 10 bis 16, **dadurch gekennzeichnet, dass** die Parkanlage (10) mindestens eine mit der Steuereinrichtung (20) in Wirkverbindung stehende Erfassungseinrichtung (102) umfasst zum Erfassen der Relativausrichtung des Kraftfahrzeuges (a-f) und einer Palette (15, 38, 40, 42) zueinander und/oder der Relativausrichtung des Kraftfahrzeuges und mindestens einer Ladeeinrichtung (60, 86, 120) zueinander.
